# EUROPEAN PATENT APPLICATION

(11) **EP 4 000 454 A1**
(43) Date of publication of application: **25.05.2022**
(21) Application number: 20210634.0
(22) Date of filing: 30.11.2020
(51) Int. Cl.: A46B 9/04, A61C 17/22, A46B 9/02

(54) **BRUSHING COMPONENT FOR AN ORAL HYGIENE PRODUCT**

(30) Priority: 17.11.2020 US 202063114898 P
(71) Applicant: Koninklijke Philips N.V., 5656 AG Eindhoven (NL)
(72) Inventor: DENGLER, Evan Dak Wah, 5656 AE Eindhoven (NL)
(74) Representative: Philips Intellectual Property & Standards

(57) **Abstract**

A brushing component is provided. The brushing component comprises angled bristle tufts with a convex brushing surface, arranged with rotational symmetry about a point of symmetry. The brushing component provides improved brushing performance to an increased proportion of the user's oral surface over conventional brushing components.

## Description

### FIELD OF THE INVENTION

The present invention relates to the field of oral hygiene products, and more particularly to a brushing component for an oral hygiene product, such as a toothbrush.

### BACKGROUND OF THE INVENTION

Many oral hygiene products employ brushing components to clean the teeth of a user. Widely-used examples include manual and powered toothbrushes, which include tufts of bristles attached to a platen of a brush head.

Brushing performance can be highly dependent on precise user positioning of the tufts of bristles, brushing angle of the tufts, and/or pressure applied by the tufts of bristles to the teeth/gum surface during brushing. Thus, dental professionals and clinicians typically communicate Directions For Use (DFUs) which specify the exact placement and brushing angle in order to achieve optimal clinical results.

However, many users do not read such directions for use. Further, for users that do, these directions can be difficult to follow and/or remember. Data acquired from brushing studies definitively shows that users do not brush at a preferred or optimal angle.

### SUMMARY OF THE INVENTION

The invention is defined by the claims.

According to examples in accordance with an aspect of the invention, there is provided a brushing component for an oral hygiene product, wherein the brushing component comprises:
a support surface; and
a group of bristle tufts extending from the support surface,
wherein the group of bristle tufts comprises a plurality of angled bristle tufts arranged to have rotational symmetry with respect to a point of symmetry,
and wherein the distal ends of the bristles of the group of bristle tufts define a brushing surface that is convex.

Proposed embodiments may be based on a combination of two features, namely: bristle tips across a group of bristle tufts being adapted to create a convex brushing surface; and rotationally-symmetric angled bristle tufts. Provision of a convex brushing surface may result in center tufts being taller than outer tufts. Further, the rotationally-symmetric angled bristle tufts may reduce a reliance on brushing orientation and/or angle for optimal brushing performance.

In conventional brushing components, bristle tufts are typically oriented perpendicular to the platen of the brush head due to ease of manufacturing. However, when all tufts are oriented in a single direction, the resultant brushing performance is orientation-dependent and thus deviation from an ideal brushing angle during use degrades brushing performance. Data suggests users do not brush at the ideal brushing angle. Proposed embodiments, on the other hand, may provide high brushing performance whilst also reducing sensitivity to brushing angle and/or orientation during use. In this way, embodiments may accommodate for a user's natural behaviour whilst ensuring adequate or optimal brushing performance.

According to proposed embodiments, the provision of angled bristle tufts in a rotationally-symmetrical distribution enables the bristle tufts to provide high brushing performance even at user-brushing angles that do not comply with typical DFUs; hence, the brushing performance may be made less dependent on user orientation. For instance, angled bristle tufts with a symmetrical diverging orientation may ensure that more tufts on the brush head will contact the surfaces at varied brushing angles, thus making the product more robust to user behavior. Additionally, the robustness to user behavior is not only delivered in a single dimension, but may apply to each of the roll, pitch and yaw angles respectively. Further, in use, more tufts may contact the oral surface at high performing angles, thereby ensuring high performance.

Embodiments may employ a concept of providing a convex brushing surface to improve brushing performance (as compared to conventional brushing components that utilize bristle tufts of identical bristle length). It has been realized that employing a convex shape of the bristle tips across a group of bristle tufts may help to ensure that contact with the oral surface during brushing is maximized (since more of the tufts may be exposed to the oral surface than when bristle tips define a flat/planar brushing surface). This is particularly advantageous with respect to the lower lingual area of a mouth, which can be difficult to clean. The proposed convex surface provides for increased contact with the rounded/curved surfaces of the lower lingual area of the mouth (i.e. the rear surfaces of the lower front teeth).

Further, the convex brushing surface may enable increased accessibility to crevices of the oral surface such as between the tooth and gumline that are difficult for users to access (since the convex brushing surface may better conform to the contour of the oral surface than a flat/planar brushing surface). Hence, embodiments may provide improved brushing performance through tufts being configured to simultaneously clean an increased proportion of the oral surface.

Proposed embodiments combine the improved accessibility and increased brushing surface area of the convex brushing surface with the robustness to user behaviour of rotationally-symmetric angled bristle tufts to provide a much superior brushing performance to an increased proportion of the user's oral surface over conventional brushing components. Indeed, experiments with proposed embodiments have shown that a synergistic effect is provided by the proposed combination of rotationally-symmetric angled bristle tufts and bristle tips across a group of bristle tufts creating/define a convex brushing surface. That is, the improvement in brushing performance of the proposed combination of features exceeds the sum of the individual performance improvements provided by the features when used in isolation.

In some embodiments, the plurality of angled bristle tufts may be symmetrically arranged with n-fold symmetry, n being an integer greater than one. For example, the group of bristle tufts may comprise three angled bristle tufts arranged with 3-fold symmetry. In another example, the group of bristle tufts may comprise four angled bristle tufts with 4-fold symmetry. In yet another example, the group of bristle tufts may comprise five angled bristle tufts with 5-fold symmetry. Such symmetrical arrangements enable the benefits of robustness via an ability to deliver performance insensitive to user orientation. The minimum of symmetrically arranged tufts required to gain the benefits of robustness may be three.

In an embodiment, the group of bristle tufts may comprise a non-angled bristle tuft positioned at the point of symmetry. Such a structure allows for further benefits of robustness to be gained when used alongside symmetrically arranged tufts.

Furthermore, in some embodiments, the lengths of the bristles of the group of bristles tufts may be substantially equal. Such a uniform nature of the bristle tuft length may provide for a simplified manufacturing process, since a single bristle tuft can be manufactured as a single unit employing bristles of equal length.

Other embodiments may comprise a second group of bristle tufts extending from the support surface, wherein the second group of bristle tufts comprises a second plurality of angled bristle tufts arranged to have rotational symmetry with respect to a second point of symmetry. For some examples, the point of symmetry and second point of symmetry may both be positioned on a longitudinal axis of the support surface. In other examples, the point of symmetry and second point of symmetry may substantially coincide with each other. In further examples, the distal ends of the bristles of the group of bristle tufts and the second group of bristle tufts may define a brushing surface that is convex. The addition of a second plurality of angled bristle tufts further improves brush head performance. The positioning of multiple points of symmetry either along a longitudinal axis or in a substantially equal position may allow for a simplified additional manufacturing process. Also, the convex nature of the additional tufts may enable a decrease in dependence on user orientation.

According to another aspect of the invention, there is provided a toothbrush comprising a brushing component according to a proposed embodiment.

According to yet another aspect of the invention, there is provided an oral hygiene product comprising a brushing component according to a proposed embodiment.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a 2D plan view of a brushing component;
Figure 2 shows a 2D plan view of a second brushing component, a cross-sectional view is alongside;
Figure 3 shows a cross-sectional view of a head end of a toothbrush with attached brushing component;
Figure 4 shows a 2D plan view of the top half of the brushing component illustrated in Figure 1, a cross-sectional view is alongside;
Figure 5 shows a brushing component example wherein the group of bristle tufts comprises three angled bristle tufts;
Figure 6 shows a brushing component concept wherein the group of bristle tufts comprises a non-angled bristle tuft and five angled bristle tufts;
Figure 7 shows a brushing component concept wherein the two groups of bristle tufts comprise three and six angled bristle tufts respectively.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage. It should be understood that the Figures are merely schematic and are not drawn to scale. It should also be understood that the same reference numerals are used throughout the Figures to indicate the same or similar parts.

Implementations in accordance with the present disclosure relate to various arrangements, adaptations, and/or configurations of bristle tufts for a brushing component pertaining to aiding improved brushing performance for a wide range of brushing angles. According to proposed concepts, a number of possible solutions may be implemented separately or jointly. That is, although these possible solutions may be described below separately, two or more of these possible solutions may be implemented in one combination or another.

Proposed embodiments may therefore improve brushing performance by providing a convex brushing surface across the bristle tips of rotationally-symmetric angled bristle tufts. Accordingly, embodiments may be used for oral hygiene products such as brush heads and toothbrushes.

Brushing components for oral hygiene products typically comprise tufts of bristles (i.e. bristle tufts) attached to a support surface (e.g. platen). A bristle is a single filament, typically nylon, which is used to clean oral surfaces. Thus, a bristle tuft is a bundle of closely-packed filaments where one end of each bristle is attached to the brush head, and the other end of each bristle is free and used for cleaning of an oral surface (through brushing the oral surface with the bristle(s)).

An angled bristle tuft is a bristle tuft that is attached to the brush head at an angle that is not perpendicular to the support surface. That is, the bristles of an angled bristle tuft form/define an angle with respect to the support surface that is less than 90° and greater than 0°. An angled bristle tufts may therefore be thought of as comprising tufts that are tilted, slanted or angled with respect to the support surface.

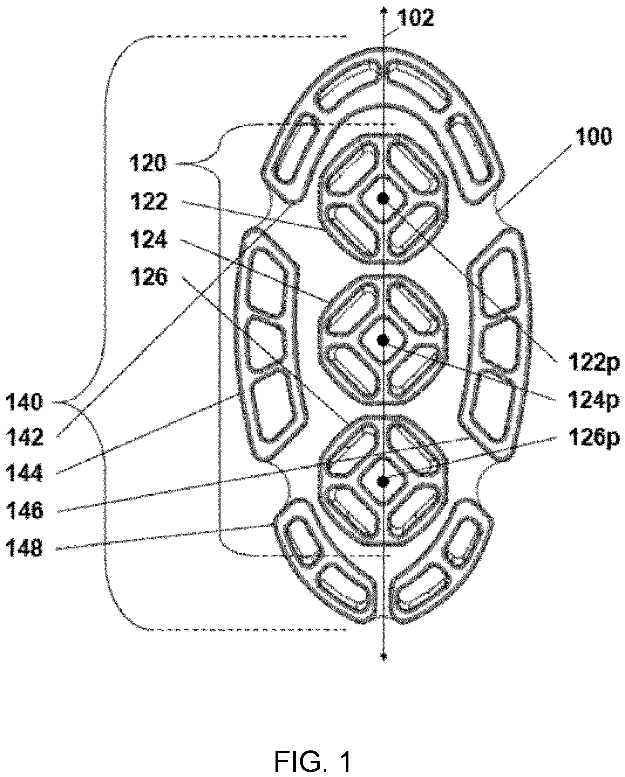

Referring to Figure 1, a brushing component according to the proposed concept(s) will now be described. Figure 1 is a 2D plan view of a brushing component according to a proposed embodiment (i.e. a view of the brushing component from above). The brushing component of this exemplary embodiment is for an oral hygiene product, specifically a toothbrush.

The brushing component comprises a rigid support surface 100 (e.g. a platen 100) and groups of bristle tufts. The groups of bristle tufts are arranged into an inner set 120 of groups (of bristle tufts) and an outer set 140. Each bristle tuft extends from the support surface 100 and is configured to come into contact with a user's oral surface in use (i.e. during brushing). Specifically, the inner set 120 of groups (of bristle tufts) comprises first 122, second 124, and third 126 groups of bristle tufts; the outer set 140 of groups comprises fourth 142, fifth 144, sixth 146 and seventh 148 groups of bristle tufts.

Each of the first 122, second 124 and third 126 groups of bristle tufts comprise a plurality of angled bristle tufts arranged to have rotational symmetry about a respective point of symmetry on the support surface. Thus, the first group 122 of bristle tufts comprises a plurality of angled bristle tufts arranged to have rotational symmetry about a point of symmetry 122p on the support surface. The rotational symmetry of the angled bristle tufts enables each group of bristle tufts to provide cleaning to the oral surface that is more robust to both user orientation and fluctuations in performance.

Also, for each group of bristle tufts, the distal ends of the bristles of the group define a brushing surface that is convex (i.e. a surface that is curved or rounded outward with respect to the support surface 100). The convex brushing surface defined by each group of bristle tufts allows for the surface contact between the oral surface and brushing surface to be maximized.

In addition, the first 122 to third 126 groups of bristle tufts comprise a plurality of angled bristle tufts that are symmetrically arranged with n-fold symmetry, n being an integer greater than one.

Specifically, in the example of Figure 1, each of the first 122, second 124 and third 126 groups of bristle tufts comprise four angled bristle tufts with 4-fold symmetry. Further, each of the first 122, second 124 and third 126 groups of bristle tufts also comprise a (central) non-angled bristle tuft positioned at the point of symmetry of the groups. For instance, the first group 122 of bristle tufts comprises a central non-angled bristle tuft positioned so that its centre substantially coincides with the point of symmetry 122p of the first group 122 of bristle tufts.

By combining the n-fold symmetrically arranged angle bristles with a central non-angled bristle tuft, the brushing performance may be less dependent on user orientation. An increased value of n may further reduce this dependence, hence improving robustness. It is proposed that a minimum value of n to provide the benefits of robustness may be three, such that a minimum required number of angled bristle tufts is three, arranged with 3-fold symmetry.

As depicted in Figure 1, the second 124 and third 126 groups of bristle tufts have arrangements that are identical to the first group 122 of bristle tufts. Hence, the second 124 and third 126 groups of bristle tufts each comprise four angled bristle tufts with 4-fold symmetry and a central non-angled bristle tuft positioned at the respective point of symmetry 124p, 126p of the group.

The first 122, second 124 and third 126 groups of bristle tufts are arranged in a linear array and spaced apart from each other. The linear arrangement is such that the respective points of symmetry 122p, 124p, 126p of the first 122, second 124 and third 126 groups of bristle tufts are positioned along a longitudinal axis 102 of the support surface 100.

The longitudinal axis 102 also coincides with the brushing component's line of symmetry, and hence the brushing performance provided by the inner set 120 of groups of bristle tufts is not only uniform across each of the first 122, second 124 and third 126 groups of bristle tufts, but also uniform across the brushing component itself. Therefore, the cleaning the brushing component provides is even across the oral surface, rather than concentrated in areas of comparatively high bristle tuft density distributed irregularly across the brushing surface, which would be undesirable since areas of the oral surface would be cleaned more than others.

The brushing component comprises an outer set 140 of groups (of bristle tufts). The outer set 140 comprises fourth 142, fifth 144, sixth 146 and seventh 148 groups of bristle tufts.

The fourth 142 and seventh 148 groups of bristle tufts are positioned at opposing ends of the longitudinal axis of the support surface 100 and each comprise angled bristle tufts. For the fourth 142 and seventh 148 groups of bristle tufts, the angled bristle tufts are angled towards the centrepoint 124p of the brushing component, which substantially coincides with the point of symmetry 124p of the second group 124 of bristle tufts.

The fifth 144 and sixth 146 groups of bristle tufts are positioned at opposite sides of the longitudinal axis of the support surface 100 and each comprise non-angled bristle tufts.

The outer set 140 of groups is symmetrical about the longitudinal axis 102. In this way, the cleaning of an oral surface by the outer set 140 of groups of bristle tufts is uniform across the brushing component.

The outer set 140 of groups of bristle tufts is implemented to increase the surface area of the brushing component, such that the brushing component covers a larger surface area of the user's oral cavity. Hence, an increased proportion of the user's oral cavity may be brushed with each brushing stroke, thereby improving brushing performance.

Computer simulations and laboratory-based studies have demonstrated that there is a synergy between the combined features of (i) rotationally-symmetric angled bristle tufts; (ii) bristle tips across a group of bristle tufts define a convex brushing surface. This synergy results in an improvement in brushing performance that exceeds the sum of the individual performance improvements associated with each feature. For instance, the following Table (Table 1) details the various brushing performance improvements obtained from various configurations of brushing component:

**Table 1**

| | Convex Brushing Surface | Flat Brushing Surface |
|---|---|---|
| Rotationally-Symmetric Angled Bristle Tufts | +10% | +5% |
| Straight (i.e. Non-Angled) Bristle Tufts | +0% | Control Value |

From Table 1 about it can be seen that rotationally-symmetric angled bristle tufts forming a flat brushing surface only provide a 5% performance improvement. Further, non-angled bristle tufts forming a convex brushing surface do not provide any performance improvement, However, when rotationally-symmetric angled bristle tufts are configured to define a convex brushing surface, a further 5% performance improvement is obtained (resulting in a total performance improvement of 10%). Thus, a synergistic effect is seen from the proposed combination of rotationally-symmetric angled bristle tufts and convex brushing surface.

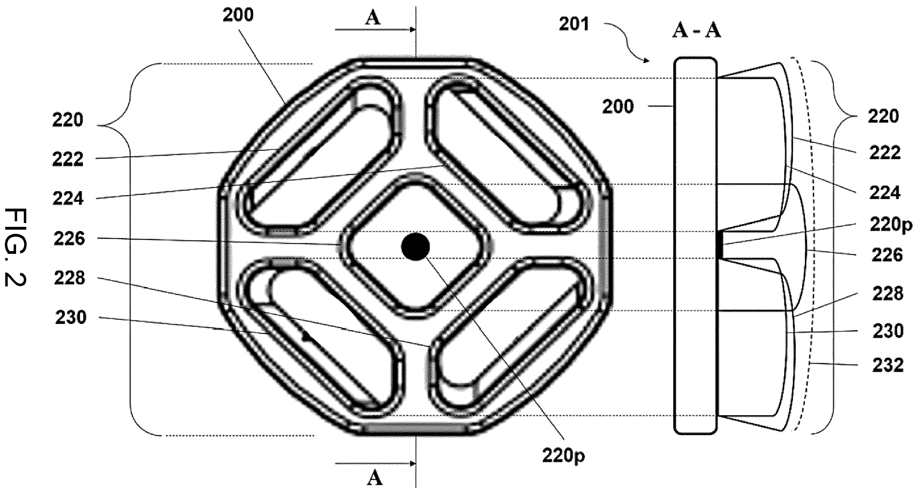

Figure 2 shows a 2D plan view of a second brushing component according to a proposed embodiment. The brushing component comprises a support surface 200 and a group 220 of bristle tufts extending from the support surface 200. The group 220 of bristle tufts comprise four angled bristle tufts 222, 224, 228, 230 arranged to have rotational symmetry with respect to a point of symmetry 220p on the support surface 200. The group 220 of bristle tufts further comprises a single non-angled bristle tuft 226 that is positioned at the point of symmetry 220p of the group 220. The arrangement of the group of bristle tufts 220 is thus identical to each of the first 122 to third 126 groups of bristle tufts in the embodiment of Figure 1.

A cross-sectional view 201 taken along line A-A is shown alongside the brushing component.

The angled bristle tufts 222, 224, 228, 230 are arranged to have rotational symmetry with respect to a point of symmetry 220p on the support surface. Thus, the group of bristle tufts comprises four angled bristle tufts with 4-fold symmetry. From the plan view, it can be seen that each angled bristle tuft is angled in a direction independent of the other tufts.

Further, the angle of each angled bristle tuft is also demonstrated in the sectional view 201, hence the difference in length and orientation of the bristle tufts 222, 224, 228, 230. The orientation of bristle tuft 222 results in an angled portrayal when compared to 224; similarly the orientation of bristle tuft 228 results in an angled portrayal when compared to 230. Additionally, due to the angled nature of bristle tuft 224, it appears the tuft's bristle length is shorter than the bristle length of bristle tuft 222; similarly the bristle length of bristle tuft 230 appears shorter than the bristle length of bristle tuft 228. However, the lengths of the bristles of the bristle tufts 222, 224, 228, 230 are substantially equal.

The distal ends of the groups of bristle tufts 222, 224, 228, 230 together define a brushing surface 232 that is convex (e.g. due to the non-angled bristle tuft 226 having an increased bristle length). Hence the brushing component benefits from a convex brushing surface, enabling maximum surface contact between the brushing component and oral surface, thereby improving brushing performance. Additionally, the convex brushing surface conforms to the contour of the oral surface, enabling increased accessibility to hard-to-reach crevices of the oral surface, such as between the tooth and gumline.

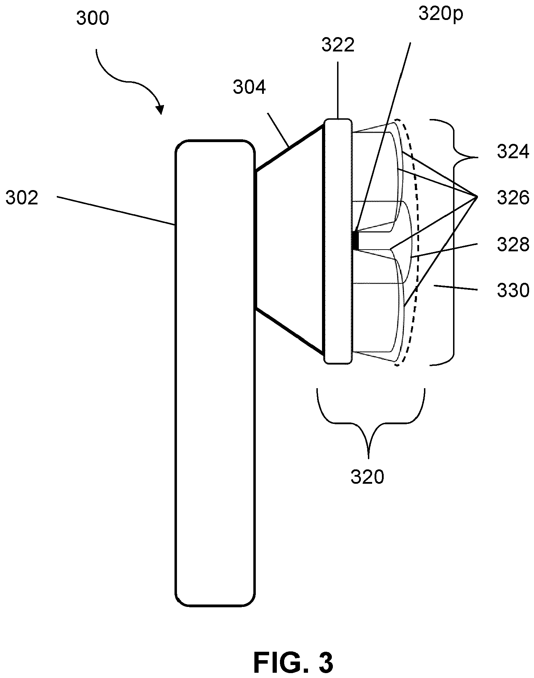

Figure 3 shows a cross-sectional view of a head end of a toothbrush 300 according to a proposed embodiment. The toothbrush comprises an elongated shaft 302, a toothbrush head 304 attached near the (distal) end of the shaft 302, and the brushing component 320 supported on the toothbrush head 304. Thus, the brushing component 320 is affixed to the toothbrush head 304, which is, in turn, affixed to the toothbrush shaft 302.

In use, a user holds the toothbrush shaft 302 (at the proximal end) and uses the brushing component 320 to clean his/her oral surface.

The brushing component 320 comprises a support surface 322 and a group 324 of bristle tufts extending from the support surface 322. The group 324 of bristle tufts comprises a plurality of angled bristle tufts 326 arranged to have rotational symmetry with respect to a point of symmetry 320p. The angled bristle tufts 326 are symmetrically arranged with n-fold symmetry, n being an integer greater than one. In this case, the group of bristle tufts comprises four angled bristle tufts 326 with 4-fold symmetry. A single, non-angled bristle tuft 328 is positioned at the point of symmetry 320p.

The distal ends of each individual bristle tuft 326, 328 define a brushing surface that is convex. Additionally the distal ends of the bristles of the group 324 of bristle tufts together define a brushing surface 330 that is convex. That is, the length of the bristles across the group 324 of bristle tufts are adapted such that they define a brushing surface 330 that is curved or rounded outward with respect to the support surface 322. This ensures accessibility for the brushing component to the oral surface.

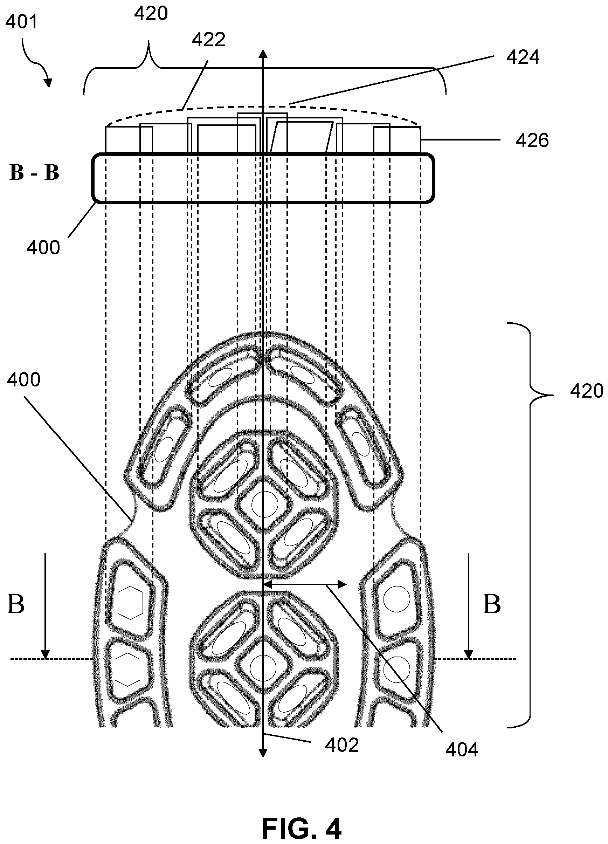

Figure 4 shows a cross-sectional view 401 of the top half of the brushing component illustrated in Figure 1, wherein the view is taken along line B-B shown in Figure 4. The brushing component comprises a support surface 400 and groups of bristle tufts 420 extending from the support surface 400. The distal ends of the bristles of the groups of bristle tufts 420 together define a brushing surface 422 that is convex.

From the cross-sectional view 401 of Figure 4, the convex brushing surface 422 of the groups of bristle tufts can be observed to span the entire brushing component. The groups of bristle tufts with the lowest perpendicular displacement 404 from the central longitudinal axis 402 have the longest bristle length 424. That is, average bristle length (nonlinearly) decreases with increased distance from the central longitudinal axis 402.

Put another way, the bristle length of a group of bristle tufts is inversely proportional to the magnitude of perpendicular displacement 404 from the central longitudinal axis 402. Hence, the groups of bristle tufts with the largest perpendicular displacement 404 from the longitudinal axis 402 are of the smallest bristle length 426. The convex nature of the brushing surface 422 defined by the groups of bristle tufts provides for maximum contact with the oral surface when brushing.

Although example embodiments have been described above as employing one or more groups of bristle tufts having angled bristle tufts that are symmetrically arranged with 4-fold symmetry, it is to be understood that embodiments may not be limited to employing 4-fold symmetry. That is, it is proposed that embodiments may employ a group of bristle tufts comprising a plurality of angled bristle tufts arranged to have rotational n-fold symmetry with respect to a point of symmetry, wherein n is an integer greater than one.

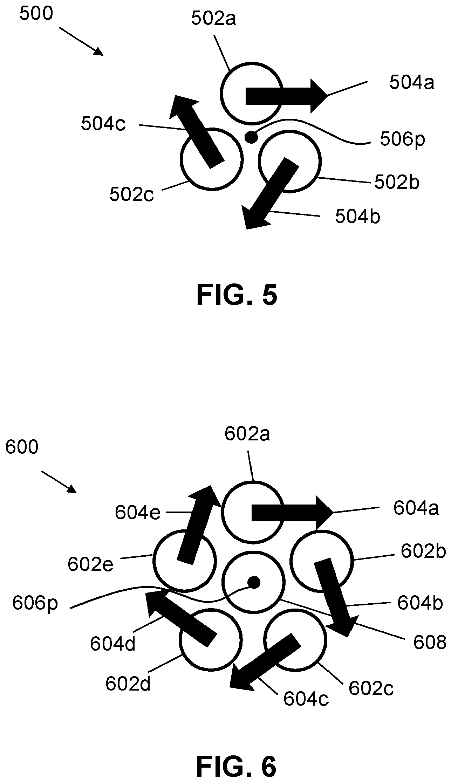

By way of example, as depicted by Figure 5, n may be 3, such that the group of bristle tufts comprises three angled bristle tufts arranged with 3-fold symmetry.

Figure 5 shows a group 500 of bristle tufts for a brushing component according to an exemplary embodiment. The group of bristle tufts 500 comprises first 502a, second 502b and third 502c bristle tufts, angled in differing directions (as depicted by the respective first 504a, second 504b and third 504c arrows). The angled bristle tufts 502a, 502b, 502c are arranged to have rotational symmetry about a point of symmetry 506p. Specifically, the group 500 of bristle tufts 502a, 502b, 502c are arranged to have 3-fold symmetry.

By way of further example, as depicted by Figure 6, n may be 5, such that the group of bristle tufts comprises five angled bristle tufts arranged with 5-fold symmetry.

Figure 6 shows a group 600 of bristle tufts for a brushing component according to an exemplary embodiment. The group of bristle tufts 600 comprises first 602a, second 602b, third 602c, fourth 602d and fifth 602e bristle tufts, angled in differing directions (as depicted by the respective first 604a, second 604b, third 604c, fourth 604d and fifth 604e arrows). The angled bristle tufts 602a, 602b, 602c, 602d, 602e are arranged to have rotational symmetry about a point of symmetry 606p. Specifically, the group 600 of bristle tufts 602a, 602b, 602c, 602d, 602e are arranged to have 5-fold symmetry. The group 600 of bristle tufts also comprises a non-angled bristle tuft 608 positioned with its centre at the point of symmetry 606p.

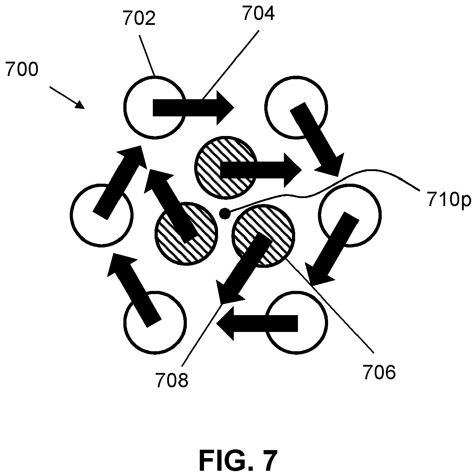

By way of yet a further example, an alternative embodiment may comprise two groups of bristle tufts, wherein the two different groups are arranged to have rotational symmetry but with different values of n. For instance as depicted by Figure 7, for a first group of bristle tufts, n may be 6, and for a second group, n may be 3. In this way, the first group of bristle tufts comprises six angled bristle tufts arranged with 6-fold symmetry, and the second group of bristle tufts comprises three angled bristle tufts arranged with 3-fold symmetry.

Specifically, Figure 7 shows a first, outer group of bristle tufts 702 comprising six bristle tufts, angled in differing directions (as depicted by respective arrows 704) and is arranged to have 6-fold symmetry. The first, outer group of bristle tufts 702 are arranged around (i.e. surround) a second, inner group of bristle tufts 706 (and are distinguished from the first, outer group in Figure 7 by hatching). The second, inner group of bristle tufts 706 comprises three bristle tufts, angled in differing directions (as depicted by respective arrows 708) and is arranged to have 3-fold symmetry. Both of the first, outer group of bristle tufts 702 and the second, inner group of bristle tufts 706 have rotational symmetry about the same, single point of symmetry 710p.

That is, the points of symmetry 710p of the first, outer group of bristle tufts 702 and the second, inner group of bristle tufts 706 substantially coincide with one another.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A brushing component for an oral hygiene product, wherein the brushing component comprises:
a support surface; and
a group of bristle tufts extending from the support surface,
wherein the group of bristle tufts comprises a plurality of angled bristle tufts arranged to have rotational symmetry with respect to a point of symmetry,
and wherein the distal ends of the bristles of the group of bristle tufts define a brushing surface that is convex.

2. The brushing component according to claim 1 wherein the plurality of angled bristle tufts are symmetrically arranged with n-fold symmetry, n being an integer greater than one.

3. The brushing component of claim 2, wherein n is an integer greater than or equal to 3.

4. The brushing component according to claim 2 wherein the group of bristle tufts comprises three angled bristle tufts arranged with 3-fold symmetry.

5. The brushing component according to claim 2 wherein the group of bristle tufts comprises four angled bristle tufts with 4-fold symmetry.

6. The brushing component according to claim 2 wherein the group of bristle tufts comprises five angled bristle tufts with 5-fold symmetry.

7. The brushing component according to any of claims 1 to 6 wherein the group of bristle tufts comprises a non-angled bristle tuft positioned at the point of symmetry.

8. The brushing component according to any of claims 1 to 7, wherein the lengths of the bristles of a bristle tuft are substantially equal.

9. The brushing component according to any of claims 1 to 8, further comprising a second group of bristle tufts extending from the support surface, wherein the second group of bristle tufts comprises a second plurality of angled bristle tufts arranged to have rotational symmetry with respect to a second point of symmetry [on the support surface].

10. The brushing component according to claim 9, wherein the point of symmetry and the second point of symmetry are both positioned on a longitudinal axis of the support surface.

11. The brushing component of claim 9 or 10, wherein the second group of bristle tufts is arranged to surround the group of bristle tufts, and wherein the point of symmetry and the second point of symmetry substantially coincide with each other.

12. The brushing component of any of claims 9 to 11, wherein the distal ends of the bristles of the group of bristle tufts and the second group of bristle tufts define a brushing surface that is convex.

13. A toothbrush comprising a brushing component according to any of claims 1 to 12.

14. An oral hygiene product comprising a brushing component according to any of claims 1 to 12.
